# EUROPEAN PATENT SPECIFICATION

(11) **EP 2 600 281 B1**
(45) Date of publication and mention of the grant of the patent: **13.06.2018**
(21) Application number: 12184988.9
(22) Date of filing: 19.09.2012
(51) Int. Cl.: G06K 7/10, G07G 1/12, G07G 1/00, G06Q 20/38

(54) **Reading an optical code with authenticatable information**
Lesen eines optischen Codes mit authentifizierbarer Information
Lecture d'un code optique avec informations authentifiables

(30) Priority: 30.11.2011 US 201113308150
(43) Date of publication of application: 05.06.2013
(73) Proprietor: NCR Corporation, Atlanta, GA 30308-1007 (US)
(72) Inventor: Crooks, John, Duluth GA Georgia 30097 (US)
(74) Representative: Secerna LLP

(56) References cited:
- GB-A- 2 217 887
- GB-A- 2 459 686
- US-A1- 2007 063 055

## Description

The present invention relates generally to optical codes. More particularly, but not exclusively, the invention relates to preventing the fraudulent use of information stored in an optical code by encrypted certain data stored in optical codes.

Any discussion of prior art throughout the specification should in no way be considered as an admission that such prior art is widely known or forms part of common general knowledge in the field.

Point of sale (POS) terminals are used throughout the retail industry to process purchase transactions. A POS terminal typically includes a personal computer (PC) core in a chassis, one or more displays, an optical code scanner with weigh scale, a cash drawer, a magnetic stripe reader (MSR), keyboard and a printer. The POS terminals can either be self-service or assisted service.

The optical code scanner includes an imaging scanner and may also include a laser scanner. The two scanners use different technologies to independently read optical codes such as barcodes presented to the scanner. The laser scanner reads a barcode by sweeping a beam of laser light across a barcode, capturing data representing the reflected laser light, and then processing the captured data to recover information encoded in the barcode. An imaging scanner reads a barcode by capturing a complete image of the barcode and then processing the image to recover information encoded in the barcode.

Optical codes, such as barcodes or QR (trade mark) codes, are generally affixed to or printed on items being presented to a POS terminal for purchase. The optical codes include information about the item they are affixed to or printed on. This information can include identification information for the item and the weight of the item if it is prepackaged and sold by weight. Some retailers have experienced a type of fraud where a person presents a false optical code, sometimes on a cell phone, instead of scanning the actual item being presented to the POS terminal for purchase. The false optical code has weight information that either matches or is approximately equal to the actual item so a weigh scale included in the POS terminal does not detect the substitution.

Therefore, to prevent the above fraud, as well as other related frauds, there is a need to determine if an optical code being presented to a POS terminal for scanning actually corresponds to the item being presented for purchase.

GB 2 459 686 discloses an optical code scanner that captures and processes an image of an encrypted optical code.

US 2007/063055 A1 discloses an optical reading device for reading information from a data carrier.

GB 2 217 887 discloses an operator unattended point of sale terminal. The claims are delimited against this document.

It is an object of the present invention to overcome or ameliorate at least one of the disadvantages of the prior art, or to provide a useful alternative.

Among its several aspects, one embodiment of the present invention recognizes the need to prevent the use of a false optical code to identify an item. A false optical code is an optical code used to identify an item when it is not associated with or intended to be used to identify the item. A false optical code can be presented in printed form or displayed on an electronic device such as a cell phone. A false optical code includes inaccurate or false information and when used to identify an item causes the item to be misidentified or mispriced or both. One aspect of the present invention reads an optical code where a portion of the information stored in the optical code is encrypted. The type of cryptography used decrypts and authenticates the encrypted data and thus prevents unauthorized parties from generating encrypted data to create a false optical code. In addition, certain information included in the encrypted data is used to identify the item associated with the optical code.

In still another embodiment, two optical codes are used to identify a single item. One or both of the optical codes includes encrypted data but the data from both of the optical codes are required before the encrypted data can be decrypted and authenticated.

In accordance with an embodiment of the present invention, there is provided an optical code scanner for reading an optical code where a portion of the information stored in the optical code is encrypted.

According to a first aspect of the present invention there is provided a point of sale terminal including an optical code scanner, said optical code scanner including: an image capture device for capturing an image of an optical code presented to the optical code scanner; a processor in communication with the image capture device, and programmed for: receiving the captured image of the optical code from the image capture device; and a weigh scale in communication with the processor, characterised in that the processor is programmed for: processing the received image to recover data stored in the optical code wherein the recovered data comprises an encrypted portion and a non-encrypted portion; identifying a cryptographic key associated with the recovered data from optical code; using the cryptographic key to decrypt the encrypted portion of the recovered data to produce decrypted data; authenticating the recovered data using information from the decrypted data; rejecting the optical code if the recovered data fails authentication; and accepting the optical code data if the recovered data passes authentication and wherein the encrypted data includes a stored weight for an item, and wherein processing the optical code if the authentication passes includes verifying that a weight determined by the weigh scale for the item matches the stored weight of the item included in the optical code.

According to an unclaimed aspect of the present invention there is provided a point of sale terminal comprising: an optical code scanner adapted to read optical codes for items presented to the optical code scanner for reading; a computer memory adapted to store computer data and computer executable instructions; and a processor in communication with the computer memory and optical code scanner where the processor executes the instructions and where the instructions cause the processor to perform steps including: receiving from the optical code scanner first data stored in a first optical code where a portion of the first data is encrypted; identifying a cryptographic key associated with the received first data read; decrypting using the cryptographic key the portion of the received first data that is encrypted; and authenticating the decrypted first data and rejecting the optical code if the authentication fails and processing the optical code data if the authentication passes.

Optionally, the point of sale terminal further includes a weigh scale in communication with the processor, and wherein the encrypted data includes a stored weight for the item, and wherein processing the optical code if the authentication passes includes verifying that a weight determined by the weigh scale for the item matches the stored weight of the item included in the optical code.

Optionally, the authenticating step includes generating a hashing signature using data from the optical code and comparing it to a hashing signature stored in the encrypted data.

Optionally, decrypting the encrypted data includes using a public/private cryptography system where one key of a public/private key pair is used to decrypt the data.

Optionally, the recovered data includes a party identifier and wherein identifying a cryptographic key includes using the party identifier to identify the cryptographic key associated with the recovered data.

Optionally, the instructions further cause the processor to perform steps including: receiving from the optical code scanner second data stored in a second optical code; and wherein the step of authenticating the decrypted first data includes using the received second data.

According to a second aspect of the present invention there is provided a computer-implemented method for reading an optical code using a point of sale terminal including an optical code scanner and a weigh scale, the method being characterised by the steps of: processing an image of the optical code to recover data stored in the optical code wherein the recovered data comprises an encrypted portion and a non-encrypted portion; identifying a cryptographic key associated with the recovered data from optical code; decrypting using the cryptographic key the encrypted portion of the recovered data to produce decrypted data; authenticating the recovered data using information from the decrypted data; rejecting the optical code data if the authentication fails; and accepting the optical code data if the authentication passes, the method, further comprising: verifying that a current weight for an item associated with the optical code matches an item weight stored in the encrypted portion of the recovered data.

Optionally, the authenticating step further includes generating a current hashing signature using a portion of the recovered data from the optical code and comparing it to an original hashing signature stored in the encrypted portion of the recovered data.

Optionally, decrypting the encrypted data includes using a public/private cryptography system where one key of a public/private key pair is used to decrypt the data.

Optionally, the recovered data includes a party identifier and wherein identifying a cryptographic key includes using the party identifier to identify the cryptographic key associated with the recovered data.

Optionally, the authenticating step includes generating a hashing signature using data from the optical code and comparing it to a hashing signature stored in the encrypted data.

Optionally, the method further comprises: receiving from the optical code scanner second data stored in a second optical code; and wherein the step of authenticating the recovered data includes using the received second data.

According to another unclaimed aspect of the present invention there is provided an optical code scanner including: a laser scanning device where the laser scanner device captures data from an optical code presented to the optical code scanner for reading; a computer memory adapted to store computer data and computer executable instructions; and a processor in communication with the laser scanning device, and the computer memory where the processor executes the instructions and where the instructions cause the processor to perform steps including: receiving the captured date from the optical code from the laser scanning device; processing the received data to recover data stored in the optical code where a portion of the recovered data is encrypted; identifying a private cryptographic key associated with the recovered data from optical code; decrypting using the private cryptographic key the encrypted portion of the recovered data to produce a clear text version of the encrypted portion; and authenticating the recovered data using information from the clear text version of the encrypted data and rejecting the optical code if the authentication fails and accepting the optical code data if the authentication passes.

Optionally, decrypting the encrypted portion includes using an XOR cipher and wherein the optical code is a one dimensional barcode and wherein authenticating the recovered data includes using a checksum.

According to another unclaimed aspect of the present invention there is provided an optical code scanner including: an image capture device where the image capture device captures an image of an optical code presented to the optical code scanner for reading; a computer memory adapted to store computer data and computer executable instructions; and a processor in communication with the image capture device, and the computer memory where the processor executes the instructions and where the instructions cause the processor to perform steps including: receiving the captured image of the optical code from the image capture device; processing the received image to recover data stored in the optical code where a portion of the recovered data is encrypted; identifying a cryptographic key associated with the recovered data from optical code; decrypting using the cryptographic key the encrypted portion of the recovered data to produce a clear text version of the encrypted portion; and authenticating the recovered data using information from the clear text version of the encrypted data and rejecting the optical code if the authentication fails and accepting the optical code data if the authentication passes.

Optionally, the authenticating step includes generating a current hashing signature using a portion of the recovered data from the optical code and comparing it to an original hashing signature stored in the encrypted portion of the recovered data.

Optionally, decrypting the encrypted data includes using a public/private cryptography system where one key of a public/private key pair is used to decrypt the data.

Optionally, the recovered data includes a party identifier and wherein identifying a cryptographic key includes using the party identifier to identify the cryptographic key associated with the recovered data.

A more complete understanding of the present invention, as well as further features and advantages of the invention, will be apparent from the following specific description, given by way of example only, with reference to the accompanying drawings, in which:
Fig. 1 is a high-level drawing in block form illustrating an exemplar embodiment of a scaling and labeling system;
Fig. 2 is a high-level block diagram illustrating an exemplar embodiment of a point-of-sale system;
Fig. 3 is a high-level block diagram illustrating an exemplar embodiment of an imaging scanner;
Fig. 4 is a high-level flow chart illustrating an exemplar method for generating a label for a variable weight item including an optical code with encrypted data; and
Fig. 5 is a high-level flow chart illustrating an exemplar method for reading a label for a variable weight item including an optical code with encrypted data.

The drawings are not necessarily drawn to scale. Throughout the drawings, like element numbers are used to describe the same parts throughout the various drawings.

In the following description, numerous details are set forth to provide an understanding of the claimed invention. However, it will be understood by those skilled in the art that the claimed invention may be practiced without these details and that numerous variations or modifications from the described embodiments are possible.

The term optical code, as used herein, includes both one and two dimensional barcodes. In addition, two dimensional barcodes include Quick Response (QR) codes and Data Matrix codes. The term optical code is not intended to be limited to just these examples but include machine readable codes that provide unique information or identification.

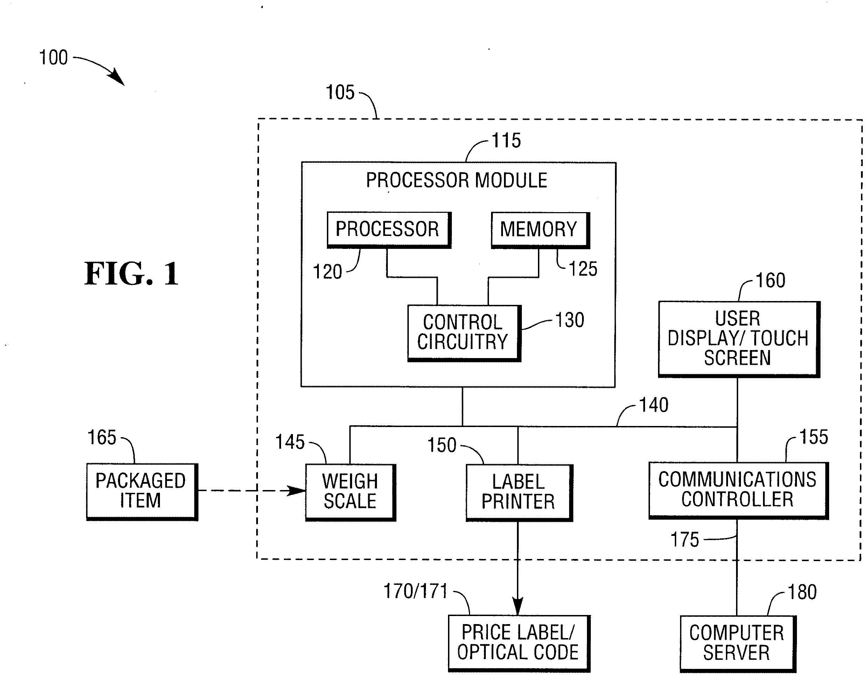

Turning to Fig. 1, there is provided a high-level drawing in block form illustrating an exemplar embodiment of a scaling and labeling system 100. The system includes a computer server 180 connected to a scaling and labeling device 105 over a computer network 175. The computer server 180 receives and sends data to the scaling and labeling device 105. The scaling and labeling device 105 include a processor module 115, a weigh scale 145, a label printer 150, a communications controller 155 and a user display/touch screen 160.

Within the processor module 115, there is included a processor 120, a memory 125 and control circuitry 130. The memory 125 includes both volatile and non-volatile memory. Software stored in the memory 125 is executed by the processor 120 and causes the processor 125 to control the devices and operation of the scaling and labeling device 105. The control circuitry 130 provides an interface between the processor 120 and the memory 125 and between the processor 120 a data bus 140 used to communicate with other devices that comprise the scaling and labeling device 105 including but not limited to the weigh scale 145, the label printer 150, the communications controller 155 and the user display and touch screen 160. In some embodiments, all or a portion of the memory 125 is connected directly to the processor 120.

The scaling and labeling device 105 is used to determine the weight of a packaged item 165 where the item 165 is sold by weight. The weight of these items varies so the actual weight must be determined before the total price of each item can be calculated. Examples of such items include packaged meat, packaged cheeses and packaged deli products. The item 165 is placed on the weigh scale 145 and the weight of the item 165 is determined. The processor 120 receives the weight of the item 165 from the weigh scale 145 and then calculates a total price for the item 165 using the item's weight and a unit weight price for the item 165. The processor 120 then generates a unique price label 170 for the item 165 and prints the label 170 using the label printer 150. The unit weight price is entered on the touch screen 160 or retrieved from the computer server 180. The processor 120 displays information including item weight and total price on the user display 160.

Included on the price label 170 is human readable information such as the unit price, total price, total weight and item identification information. The price label 170 further includes an optical code 171 that is generated by the processor 120. The optical code 171 includes item identification information, price and weight information. In some embodiments, the optical code 171 also includes additional information such as an expiration date.

A portion of the information stored in optical code 171 is encrypted by the processor 120. The information is encrypted using a public-key cryptography system. A public-key cryptography system uses matched public and private keys to encrypt/decrypt data and authenticate the party that encrypted the data. In a public-key cryptography system, a party uses a private key of a key pair to encrypt data and publishes a matched public key of the key pair that is used to decrypt the encrypted data. The public key is the only key that will decrypt the data and the public key cannot be used to encrypt false data that is substituted for the encrypted data. The private key is kept secret but the public key is general available to anybody that has a legitimate need for it. Because only the public key can decrypt data encrypted by the matching private key, being able to successfully decrypt the data proves that the data was encrypted by the private key and generally used to authenticate the source of the data.

In some embodiments, the process of encrypting the data includes performing a hashing function on some or all of the information stored in the optical code. A hashing function is a cryptographic function that processes data to generate a unique signature, sometimes referred to as a hash. Generally, the hashing function is performed on information that will not be encrypted and/or information prior to being encrypted. Examples of hashing functions include MD5, SHA-3 and BLAKE. In the embodiment, the hashing function produces a first unique signature that is included as part of the encrypted data stored in the optical code. When the optical code is read, the encrypted data is also read and then decrypted using the matching public key. The hashing function is then performed on some or all of the decrypted data along with the data that was not encrypted to create a second unique signature. If the first and second unique signatures are identical, the encrypted data has been properly decrypted and the data has not been altered since the original hashing function was performed.

The portion of the information stored in the optical code that is never encrypted or decrypted is referred to as clear text. The portion of the information stored in the optical code that is encrypted is referred to as plain text before it is encrypted and after it is decrypted and as encrypted data when it is encrypted.

In some embodiments, a party identifier is stored in the optical code 171. The party identifier is stored in clear text (never encrypted) and is associated with a party that generated the encrypted data. The party may be a company that packages, weighs and labels items or a company that contracts to have the work performed. In one example, the company is a store where items are packaged, weighed, labeled and placed on display for purchase. Items are then selected and presented to a POS terminal to be scanned for purchase. In another example, the company is a suppler to a store where the item is shipped to the store and placed on display for purchase. The item is then selected and presented to a POS terminal to be scanned for purchase. The party identifier is associated with a public key and is used by the POS terminal to retrieve or identify the public key that is then used to decrypt the encrypted data stored in the optical code 171.

In some embodiments, the process of encrypting the data does not involve using a public-key cryptography system but instead uses a simpler cipher that modifies/encrypts the original data using a first function where a second function can be used to recreate the original data. An XOR cipher is a one example of a function that encrypts and decrypts data but does not use a public key. An XOR cipher encrypts data by applying a bitwise XOR operation to every byte using a given key. The data is decrypted by reapplying the bitwise XOR operation to every byte using the same given key. In these embodiments, the size of the data prior to encryption is the same as after encryption. In addition, embodiments that use this type of cipher generally use one dimensional optical codes and the labeling of an item and the purchase of the item usually occur in the same store. The store can create the given key and make sure it is used to create the labeling for an item and also used by the POS terminals to decrypt the data. Because one dimensional optical codes (such as barcodes) are used, a laser scanner is able to read them.

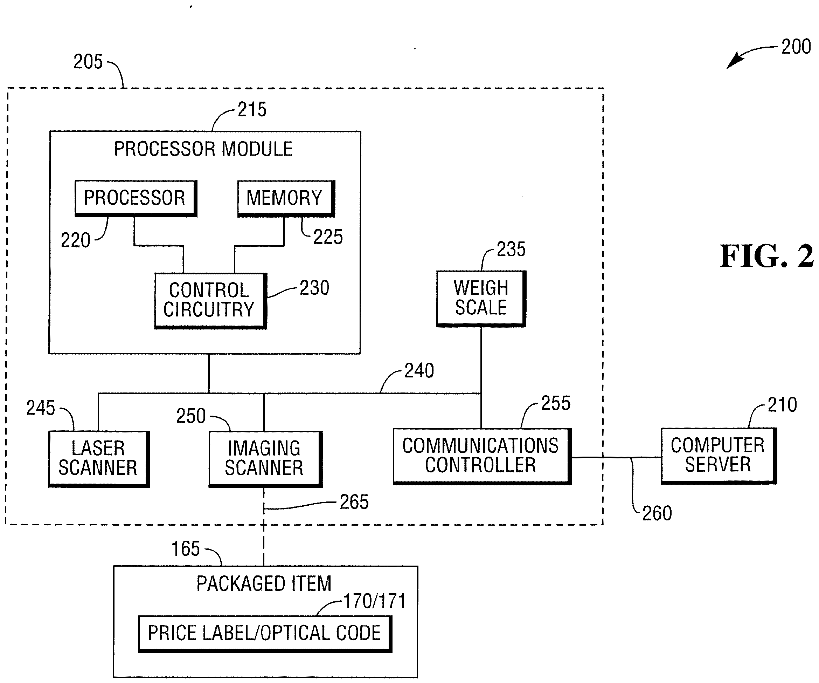

Referring now to Fig. 2, there is provided a high-level block diagram illustrating an exemplar embodiment of a point of sale (POS) system 200. The POS system 200 can be either an assisted or self-checkout system. The POS system 200 includes a POS terminal 205 connected over a data network 260 to a computer server 210. The POS terminal 205 includes a processor module 215, a laser scanner 245, an imaging scanner 250, a weigh scale 235 and a communications controller 255. In some embodiments, the POS terminal 205 does not include a laser scanner 245.

The processor module 215 includes a processor 220, a memory 225 and control circuitry 230. The memory 225 includes both volatile and non-volatile memory. Software stored in the memory 225 is executed by the processor 220 and causes the processor 220 to control the devices and operation of the POS terminal 205. The control circuitry 230 provides an interface between the processor 220 and the memory 225 and between the processor 220 a data bus 240 used to communicate with other devices that comprise the POS terminal 205 including but not limited to the laser scanner 245, the imaging scanner 250 and the communications controller 255. In some embodiments, all or a portion of the memory 225 is connected directly to the processor 220.

The imaging scanner 250 has a viewing path 265. The imaging scanner 250 can generally capture and read optical codes located in the viewing path 265. The optical code 171 printed on the price label 170 of the packaged item 165 is located in the viewing path 265 of the imaging scanner 250.

The weigh scale 235 is used to weigh items being presented for purchase to the POS terminal 200. The scale 235 can also be used as a security scale to determine if an item identified for purchase has the correct predetermined weight value.

The communications controller 255 includes hardware and software required to communicate with external devices such as the computer server 210 over the data network 260.

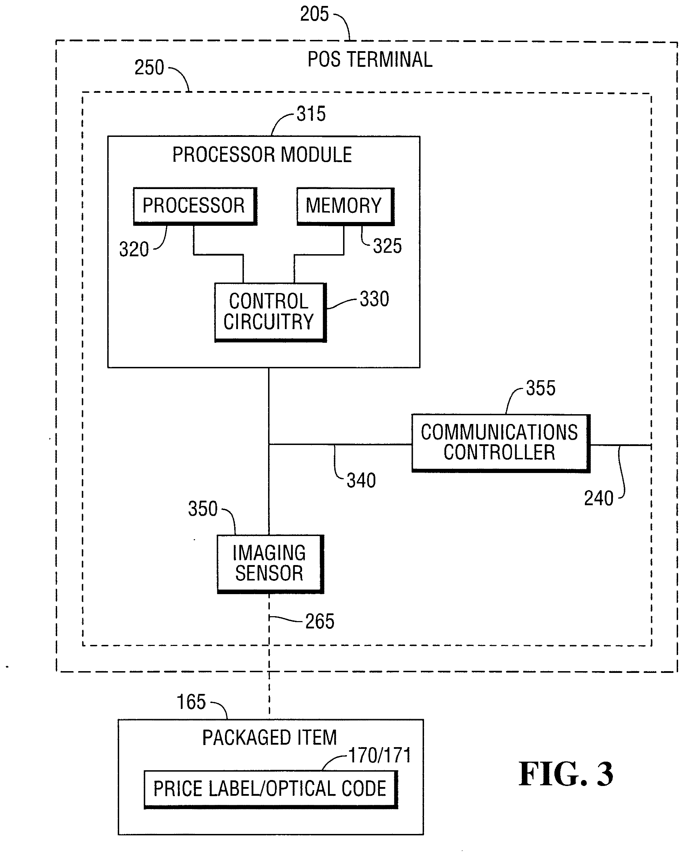

Referring now to Fig. 3, there is provided a high-level block diagram illustrating an exemplar embodiment of an imaging scanner 250. The imaging scanner 250 reads an optical code by capturing an image of the optical code and processing the image to recover information stored in the optical code. The imaging scanner 250 communicates with the POS terminal 205 over the computer bus 240 using a local communications controller 355. The imaging scanner 250 further includes a processor module 315 and an imaging sensor 350.

The processor module 315 includes a processor 320, a memory 325 and control circuitry 330. The memory 325 includes both volatile and non-volatile memory. Software stored in the memory 325 is executed by the processor 320 and causes the processor 320 to control the devices and operation of the imaging scanner 250 including the processing of captured images to identify an optical code and recover information stored in the optical code. When information is recovered from an optical code, the information is sent to the POS terminal 205 using the data bus 240. The processor 320 in the imaging scanner 250 processes the captured image but in some embodiments additional processing of the image or of the recovered information is performed by the processor 220 in the POS terminal 205.

The control circuitry 330 provides an interface between the processor 320 and the memory 325; and also between the processor 320 and a data bus 340 used to communicate with other devices that comprise the imaging scanner 250 (these other devices including, but not limited to, the imaging sensor 350 and the communications controller 355). In some embodiments, all or a portion of the memory 325 is connected directly to the processor 320.

The communications controller 355 includes hardware and software required to communicate with other devices in the POS terminal 205 over the computer bus 240. In some embodiments, the data connection 240 is implemented using an industry standard USB bus.

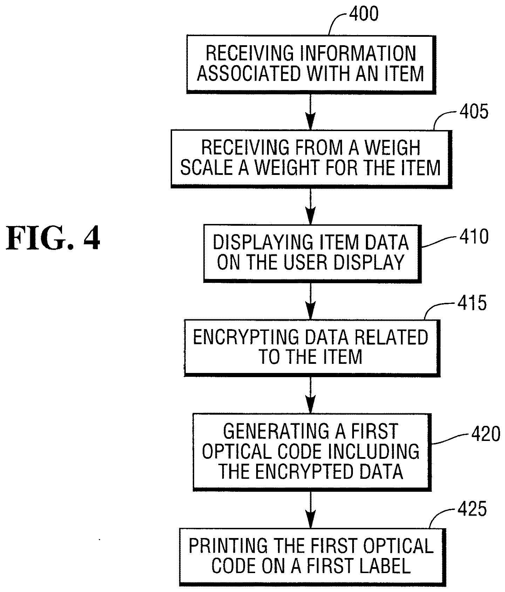

Turning to Fig. 4, there is provided a high-level flow chart illustrating an exemplar method for generating a label for a variable weight item including encrypted data. This method is implemented using the scaling and labeling device 105. In step 400, the processor 120 receives information associated with an item 165. The information can be entered on the user display/touch screen display 160 or it can be retrieved from the computer server 180 over the computer network 175 or a combination of both. The entered or retrieved information is associated with the item 165 and includes a description of the item, a price per unit weight and a private encryption key. The scaling and labeling device 105 uses a public/private cryptography system and the private encryption key to encrypt a portion of the information related to the item 165.

The cryptography system uses a public key and a matching private key. The private key is generally used to encrypt data and is kept secret while the public key is made public and is generally used to decrypt the data. Only matching keys will work to encrypt and decrypt data. In some embodiments the information associated with the item 165 includes party identification information associated with the encryption method. The party identification information identifies the company that operates the scaling and labeling device 105 and is used to retrieve a public key for the company that matches the private key used to encrypt the data.

In some embodiments, the cryptography system used by the scaling and labeling device 105 does not use the public-key cryptography system but instead uses a simpler cipher such as the XOR cipher discussed above.

In step 405, the item 165 is placed on the weigh scale 145 and the processor 120 receives a weight for the item 165 from the weigh scale 145. In step 410, the processor 120 displays data for the item 165 on the user display/touch screen 160. This information includes the weight of the item 165 and the total price calculated by multiplying the weight of the item 165 by the unit price for the item 165.

In step 415, the processor 120 encrypts data related to the item 165. The data related to the item 165 includes the weight of the item 165. In some embodiments, the data includes an expiration date that is used to determine when an item can not longer be sold. It also prevents the use of the optical code after the expiration date in a fraudulent manner. In still other embodiments, the data includes identification information about the item 165. The processor 120 encrypts the data related to the item 165 using the private encryption key and a public/private key cryptography system. In some embodiments, the cryptography system is based on the RSA public/private key cryptography system. In other embodiments, the cryptography system is based on simple cipher such as an XOR cipher.

In step 420, the processor 120 generates a first optical code that includes the encrypted data and non-encrypted data. In step 425, the processor 120 prints the first optical code 171 on a first label 170 using the label printer 150. The first label 170 is then applied to the item 165. In some embodiments, a second optical code is generated and printed on a second label. The second label is then applied to the item 165 generally in an area away from the first label making it difficult for a cell phone (or other portable device) to take a photo of both labels at one time.

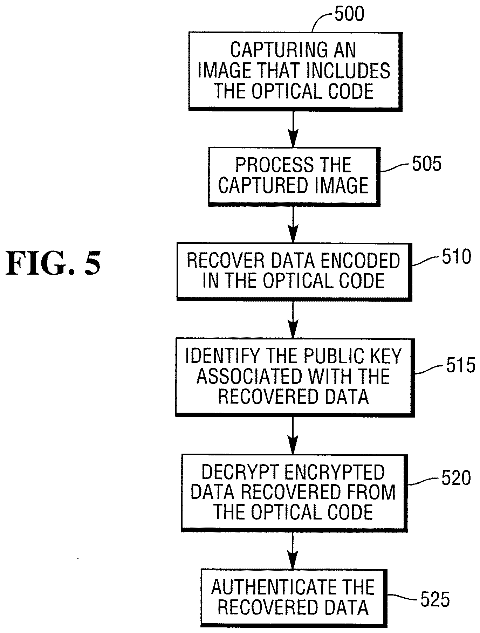

Turning to Fig. 5, there is provided a high-level flow chart illustrating an exemplar method for reading a label for a variable weight item including encrypted data. In this example, the optical code 171 generated by the scaling and labeling device 105 as illustrated in Fig. 4 is presented to the POS terminal 205 and read.

In step 500, the imaging scanner 250 captures an image that includes the optical code 171. The optical code 171 is printed on the price label 170 which is attached to packaged item 165. The packaged item 165 is being presented to the POS terminal 205 for scanning as part of a purchase transaction. In step 505, the captured image is processed by the processor 320 in the imaging scanner 250 to determine if an optical code is present. In step 510, the processor 320, after determining that an optical code was present, recovers the data stored in the optical code 171. Storing data in an optical code means translating the data from one form such as simple text to the form used by the optical code to store data. Any cryptographic functions would be in addition to the process of storing data into an optical code. Therefore, the data initially recovered from the optical code 171 includes both clear text (never encrypted text) and encrypted data.

In step 515, the processor 320 identifies the public key associated with the recovered data. In some embodiments, the recovered data includes a party identifier that identifies the party responsible for creating the optical code and is used to identify a public key associated with the recovered data. In some embodiments, multiple different public keys are stored in a database on the computer server 210 and the processor 320 queries the database and retrieves the proper public key from the database.

In step 520, the processor 320 decrypts the portion of the recovered data that is encrypted using the identified public key to create a plain text version. The recovered data now includes clear text information which is information that was never encrypted and plain text information which was decrypted from the encrypted information.

In step 525, the processor 320 authenticates a portion of the recovered data. In some embodiments, authenticating includes performing a hashing function on a portion of the recovered data and comparing the resulting signature to a signature that was included as part of the encrypted data. If the two signatures are identical, it proves the data has not been altered and authenticates the data.

In some embodiments, the cryptographic system does not involve using a public-key cipher but instead uses a simpler cipher such as an XOR cipher as disclosed above. In these embodiments, authentication involves using a generic checksum or a check digit concept as disclosed by GS1 in their General Specification.

In some embodiments, steps 515-525 are performed by the processor 220 in the POS terminal 205. The data recovered from the optical code 171 in step 510 is sent to the processor 220 in the POS terminal 205 which then performs steps 515-525. In these embodiments, the processor 220 in the POS terminal 205 may have a higher performance than the processor 320 in the imaging scanner 250 so that it can perform the cryptographic functions faster.

In still other embodiments, the packaged item 165 has a second optical code that contains additional security information that must be recovered before the encrypted information the first optical code 171 can be decrypted or authenticated.

Although particular reference has been made to an embodiment that includes a POS terminal and examples have been provided illustrating the invention in a POS system, certain other embodiments, variations and modifications are also envisioned within the scope of the following claims. For example, there are embodiments where the invention is used in systems that do not involve processing items for purchase.

## Claims

1. A point of sale terminal (205) including an optical code scanner (250), said optical code scanner (250) including:
an image capture device (350) for capturing an image of an optical code (171) presented to the optical code scanner (250);
a processor (220 or 320) in communication with the image capture device (350) and programmed for receiving the captured image of the optical code (171) from the image capture device (350); and
a weigh scale (235) in communication with the processor (220 or 320), **characterised in that** the processor (220 or 320) is programmed for:
processing the received image to recover data stored in the optical code (171), wherein the recovered data comprises an encrypted portion and a non-encrypted portion;
identifying a cryptographic key associated with the recovered data from the optical code (171);
using the cryptographic key to decrypt the encrypted portion of the recovered data to produce decrypted data;
authenticating the recovered data using information from the decrypted data;
rejecting the optical code (171) if the recovered data fails authentication; and
accepting the optical code (171) data if the recovered data passes authentication, and wherein the encrypted data includes a stored weight for an item (165), and wherein processing the optical code (171) if the authentication passes includes verifying that a weight determined by the weigh scale (235) for the item (165) matches the stored weight of the item (165) included in the optical code (171).

2. The point of sale terminal (205) of claim 1, wherein authenticating the recovered data includes generating a current hashing signature using a portion of the decrypted data and the non-encrypted portion of the recovered data from the optical code (171) and comparing it to an original hashing signature stored in the encrypted portion of the recovered data.

3. The point of sale terminal (205) of claim 1 or 2, wherein decrypting the encrypted portion includes using a public/private cryptography system where one key of a public/private key pair is used to decrypt the encrypted portion.

4. The point of sale terminal (205)of claim 3, wherein the recovered data includes a party identifier and wherein identifying a cryptographic key includes using the party identifier to identify the cryptographic key associated with the recovered data.

5. The point of sale terminal of any of claims 1 to 4, wherein the processor is further programmed for:
receiving from the optical code scanner (250) second data stored in a second optical code; and
wherein the step of authenticating the recovered data includes using the received second data.

6. A computer-implemented method for reading an optical code (171) using a point of sale terminal (205) including an optical code scanner (250) and a weigh scale (235), the method being **characterised by** the steps of:
processing an image of the optical code (171) to recover data stored in the optical code (171) wherein the recovered data comprises an encrypted portion and a non-encrypted portion (step 510);
identifying a cryptographic key associated with the recovered data from the optical code (step 515);
decrypting using the cryptographic key the encrypted portion of the recovered data (step 520) to produce decrypted data;
authenticating the recovered data using information from the decrypted data (step 525);
rejecting the optical code data if the authentication fails; and
accepting the optical code data if the authentication passes, the method, further comprising:
verifying that a current weight for an item (165) associated with the optical code (171) matches an item weight stored in the encrypted portion of the recovered data.

7. The method of claim 6, wherein the authenticating step further includes generating a current hashing signature using a portion of the decrypted data and the non-encrypted portion of the recovered data from the optical code and comparing it to an original hashing signature stored in the encrypted portion of the recovered data.

8. The method of claim 6, wherein the authenticating step includes generating a hashing signature using data from the optical code (171) and comparing it to a hashing signature stored in the encrypted data.

9. The method of any of claims 6 to 8, further comprising:
receiving from the optical code scanner (250) second data stored in a second optical code; and
wherein the step of authenticating the recovered data includes using the received second data.

## Patentansprüche

1. Ein Point-of-Sale-Terminal (205), das einen optischen Codescanner (250) beinhaltet, wobei der optische Codescanner (250) Folgendes beinhaltet:
eine Bilderfassungsvorrichtung (350) für das Erfassen eines Bildes eines optischen Codes (171), der dem optischen Codescanner (250) präsentiert wird;
einen Prozessor (220 oder 320) in Kommunikation mit der Bilderfassungsvorrichtung (350) und für das Empfangen des erfassten Bildes des optischen Codes (171) von der Bilderfassungsvorrichtung (350) programmiert; und
eine Waage (235) in Kommunikation mit dem Prozessor (220 oder 320), **dadurch gekennzeichnet, dass** der Prozessor (220 oder 320) für Folgendes programmiert ist:
Verarbeiten des empfangenen Bildes zum Wiederherstellen von Daten, die im optischen Code (171) gespeichert sind, wobei die wiederhergestellten Daten einen verschlüsselten Teil und einen nicht verschlüsselten Teil umfassen;
Identifizieren eines kryptografischen Schlüssels, der mit den aus dem optischen Code (171) wiederhergestellten Daten verbunden ist;
Verwenden des kryptografischen Schlüssels zum Entschlüsseln des verschlüsselten Teils der wiederhergestellten Daten, um entschlüsselte Daten zu produzieren;
Authentifizieren der wiederhergestellten Daten mithilfe von Informationen aus den entschlüsselten Daten;
Ablehnen des optischen Codes (171), wenn die Authentifizierung der wiederhergestellten Daten fehlschlägt; und
Akzeptieren der Daten des optischen Codes (171), wenn die wiederhergestellten Daten erfolgreich authentifiziert werden können, und wobei die verschlüsselten Daten ein gespeichertes Gewicht für ein Element (165) beinhalten, und wobei das Verarbeiten des optischen Codes (171) bei erfolgreicher Authentifizierung das Verifizieren beinhaltet, dass ein von der Waage (235) für das Element (165) ermittelte Gewicht mit dem gespeicherten Gewicht des Elements (165) übereinstimmt, das im optischen Code (171) enthalten ist.

2. Point-of-Sale-Terminal (205) nach Anspruch 1, wobei das Authentifizieren der wiederhergestellten Daten das Erzeugen einer aktuellen Hashing-Signatur mithilfe eines Teils der entschlüsselten Daten und des nicht verschlüsselten Teils der wiederhergestellten Daten aus dem optischen Code (171) und deren Vergleichen mit einer ursprünglichen Hashing-Signatur, die im verschlüsselten Teil der wiederhergestellten Daten gespeichert ist, beinhaltet.

3. Point-of-Sale-Terminal (205) nach Anspruch 1 oder 2, wobei das Entschlüsseln des verschlüsselten Teils das Verwenden eines öffentlichen/privaten Kryptografiesystems beinhaltet, wobei eines des öffentlichen/privaten Schlüsselpaars verwendet wird, um den verschlüsselten Teil zu entschlüsseln.

4. Point-of-Sale-Terminal (205) nach Anspruch 3, wobei die wiederhergestellten Daten eine Parteienkennung beinhalten und wobei das Identifizieren eines kryptografischen Schlüssels das Verwenden der Parteienkennung zum Identifizieren des kryptografischen Schlüssels beinhaltet, der mit den wiederhergestellten Daten verbunden ist.

5. Point-of-Sale-Terminal nach einem der Ansprüche 1 bis 4, wobei der Prozessor ferner für Folgendes programmiert ist:
Empfangen zweiter Daten, die in einem zweiten optischen Code gespeichert sind, von dem optischen Scanner (250); und
wobei der Schritt des Authentifizierens der wiederhergestellten Daten das Verwenden der empfangenen zweiten Daten beinhaltet.

6. Computer-implementiertes Verfahren für das Lesen eines optischen Codes (171) mithilfe eines Point-of-Sale-Terminals (205), das einen optischen Codescanner (250) und eine Waage (235) beinhaltet, wobei das Verfahren durch folgende Schritte gekennzeichnet ist:
Verarbeiten eines Bildes des empfangenen Codes (171) zum Wiederherstellen von Daten, die im optischen Code (171) gespeichert sind, wobei die wiederhergestellten Daten einen verschlüsselten Teil und einen nicht verschlüsselten Teil umfassen (Schritt 510);
Identifizieren eines kryptografischen Schlüssels, der mit den aus dem optischen Code wiederhergestellten Daten verbunden ist (Schritt 515);
Entschlüsseln des verschlüsselten Teils der wiederhergestellten Daten mithilfe des kryptografischen Schlüssels (Schritt 520), um entschlüsselte Daten zu produzieren;
Authentifizieren der wiederhergestellten Daten mithilfe von Informationen aus den entschlüsselten Daten (Schritt 525);
Ablehnen der Daten des optischen Codes, wenn die Authentifizierung fehlschlägt; und
Akzeptieren der Daten des optischen Codes, wenn die Authentifizierung erfolgreich ist, das Verfahren ferner umfassend:
Verifizieren, dass ein aktuelles Gewicht für ein Element (165), das mit dem optischen Code (171) verbunden ist, mit einem Elementgewicht übereinstimmt, das im verschlüsselten Teil der wiederhergestellten Daten gespeichert ist.

7. Verfahren nach Anspruch 6, wobei der Authentifizierungsschritt ferner das Erzeugen einer aktuellen Hashing-Signatur mithilfe eines Teils der entschlüsselten Daten und des nicht verschlüsselten Teils der wiederhergestellten Daten aus dem optischen Code und deren Vergleichen mit einer ursprünglichen Hashing-Signatur, die im verschlüsselten Teil der wiederhergestellten Daten gespeichert ist, beinhaltet.

8. Verfahren nach Anspruch 6, wobei der Authentifizierungsschritt das Erzeugen einer Hashing-Signatur mithilfe von Daten aus dem optischen Code (171) und deren Vergleichen mit einer Hashing-Signatur, die in den verschlüsselten Daten gespeichert ist, beinhaltet.

9. Verfahren nach einem der Ansprüche 6 bis 8, ferner umfassend:
Empfangen zweiter Daten, die in einem zweiten optischen Code gespeichert sind, von dem optischen Codescanner (250); und
wobei der Schritt des Authentifizierens der wiederhergestellten Daten das Verwenden der empfangenen zweiten Daten beinhaltet.

## Revendications

1. Terminal de point de vente (205) incluant un lecteur de codes optiques (250), ledit lecteur de codes optiques (250) incluant :
un dispositif de capture d'image (350) pour la capture d'une image d'un code optique (171) présenté au lecteur de codes optiques (250) ;
un processeur (220 ou 320) en communication avec le dispositif de capture d'image (350), et programmé pour la réception l'image capturée du code optique (171) à partir du dispositif de capture d'image (350) ; et
une balance (235) en communication avec le processeur (220 ou 320), **caractérisée en ce que** le processeur (220 ou 320) est programmé pour :
le traitement de l'image reçue pour récupérer des données stockées dans le code optique (171), où les données récupérées comprennent une partie cryptée et une partie non-cryptée ;
l'identification d'une clé cryptographique associée aux données récupérées du code optique (171) ;
l'utilisation de la clé cryptographique pour décrypter la partie cryptée des données récupérées pour produire des données décryptées ;
l'authentification des données récupérées en utilisant des informations provenant des données décryptées ;
le rejet du code optique (171) si l'authentification des données récupérées échoue ; et
l'acceptation du code optique (171) si l'authentification des données récupérées réussit, et où les données cryptées incluent un poids stocké pour un article (165), et où le traitement du code optique (171) si l'authentification réussit inclut la vérification qu'un poids déterminé par la balance (235) pour l'article (165) correspond au poids stocké de l'article (165) inclus dans le code optique (171).

2. Terminal de point de vente (205) selon la revendication 1, dans lequel l'authentification des données récupérées inclut la génération d'une signature de hachage actuelle en utilisant une partie des données décryptées et la partie non-cryptée des données récupérées du code optique (171) et la comparaison de celle-ci avec une signature de hachage originale stockée dans la partie cryptée des données récupérées.

3. Terminal de point de vente (205) selon la revendication 1 ou 2, dans lequel le décryptage de la partie cryptée inclut l'utilisation d'un système de cryptographie publique/privé dans lequel une clé d'une paire de clés publiques/privées est utilisée pour décrypter la partie cryptée.

4. Terminal de point de vente (205) selon la revendication 3, dans lequel les données récupérées incluent un identificateur de tiers et dans lequel l'identification d'une clé cryptographique inclut l'utilisation de l'identificateur de tiers pour identifier la clé cryptographique associée aux données récupérées.

5. Terminal de point de vente selon l'une quelconque des revendications 1 à 4, dans lequel le processeur est programmé en outre pour :
la réception, à partir du lecteur optique (250) de deuxièmes données stockées dans un deuxième code optique ; et
dans lequel l'étape d'authentification des données récupérées inclut l'utilisation des deuxièmes données reçues.

6. Procédé mis en oeuvre par ordinateur pour la lecture d'un code optique (171) en utilisant un terminal de point de vente (205) incluant un lecteur de codes optiques (250) et une balance (235), le procédé étant **caractérisé par** les étapes consistant :
du traitement d'une image du code optique (171) pour récupérer des données stockées dans le code optique (171) où les données récupérées comprennent une partie cryptée et une partie non-cryptée (étape 510) ;
de l'identification d'une clé cryptographique associée aux données récupérées du code optique (étape 515) ;
du décryptage par utilisation de la clé cryptographique de la partie cryptée des données récupérées (étape 520) pour produire des données décryptées ;
de l'authentification des données récupérées en utilisant des informations provenant des données décryptées (étape 525) ;
du rejet des données du code optique si l'authentification échoue ; et
de l'acceptation des données du code optique si l'authentification réussit, le procédé comprenant, en outre :
la vérification qu'un poids actuel d'un article (165) associé au code optique (171) correspond un poids d'article stocké dans la partie cryptée des données récupérées.

7. Procédé selon la revendication 6, dans lequel l'étape d'authentification inclut en outre la génération d'une signature de hachage actuelle en utilisant une partie des données décryptées et la partie non-cryptée des données récupérées du code optique et la comparaison de celle-ci avec une signature de hachage originale stockée dans la partie cryptée des données récupérées.

8. Procédé selon la revendication 6, dans lequel l'étape d'authentification inclut la génération d'une signature de hachage en utilisant des données du code optique (171) et la comparaison de celle-ci avec une signature de hachage stockée dans les données cryptées.

9. Procédé selon l'une quelconque des revendications 6 à 8, comprenant en outre :
la réception à partir du lecteur de codes optiques (250) de deuxièmes données stockées dans un deuxième code optique ; et
dans lequel l'étape d'authentification des données récupérées inclut l'utilisation des deuxièmes données reçues.
